# EUROPEAN PATENT APPLICATION

(11) **EP 4 459 701 A2**
(43) Date of publication of application: **06.11.2024**
(21) Application number: 24165285.8
(22) Date of filing: 21.03.2024
(51) Int. Cl.: H01M 4/134, H01M 4/1395, H01M 10/0525, H01M 10/0562, H01M 4/02

(54) **SILICON CLATHRATE ELECTRODE ACTIVE MATERIAL, NEGATIVE ELECTRODE MIXTURE, NEGATIVE ELECTRODE ACTIVE MATERIAL LAYER, SOLID-STATE LITHIUM-ION BATTERY, AND METHOD FOR MANUFACTURING NEGATIVE ELECTRODE ACTIVE MATERIAL LAYER**

(30) Priority: 01.05.2023 JP 2023075707
(71) Applicant: TOYOTA JIDOSHA KABUSHIKI KAISHA, Toyota-shi, Aichi-ken, 471-8571 (JP)
(72) Inventor: OTAKI, Mitsutoshi, Toyota-shi, 471-8571 (JP); YOSHIDA, Jun, Toyota-shi, 471-8571 (JP); YAMAGUCHI, Yasuhiro, Toyota-shi, 471-8571 (JP); EGUCHI, Tatsuya, Toyota-shi, 471-8571 (JP); HARATA, Masanori, Toyota-shi, 471-8571 (JP); NIIMI, Tomohiro, Toyota-shi, 471-8571 (JP); YUKAWA, Kayoko, Toyota-shi, 471-8571 (JP); URABE, Kota, Toyota-shi, 471-8571 (JP)
(74) Representative: D Young & Co LLP

(57) **Abstract**

The present disclosure provides a silicon clathrate electrode active material having low expansion during charging and a solid-state lithium-ion battery comprising such a silicon clathrate electrode active material. The silicon clathrate electrode active material of the present disclosure comprises a sodium compound. In the silicon clathrate electrode active material of the present disclosure, a ratio of a mass of the sodium compound relative to a total mass of the silicon clathrate electrode active material and the sodium compound is 0.1% by mass or greater and 5.0% by mass or less. The solid-state lithium-ion battery of the present disclosure comprises the negative electrode active material layer of the present disclosure. The negative electrode active material layer of the present disclosure contains the negative electrode mixture of the present disclosure. The negative electrode mixture of the present disclosure comprises a silicon clathrate electrode active material and a solid electrolyte.

## Description

### FIELD

The present disclosure relates to a silicon clathrate electrode active material, a negative electrode mixture, a negative electrode active material layer, a solid-state lithium-ion battery, and a method for manufacturing a negative electrode active material layer.

### BACKGROUND

In recent years, there has been ongoing development of batteries. For example, in the automotive industry, the development of batteries for use in electric vehicles or hybrid vehicles has been advancing. In addition, silicon is known as an electrode active material used in batteries, particularly lithium-ion batteries.

Silicon electrode active materials have a large theoretical capacity and are effective in high energy densification of batteries. However, silicon electrode active materials have a problem of large expansion during charging. On the other hand, it is known that using a silicon clathrate electrode active material as a silicon electrode active material suppresses expansion during charging.

For example, PTL 1 discloses a silicon clathrate electrode active material comprising a silicon clathrate type II crystal phase and having a composition of NaₓSi₁₃₆ (1.98 < x < 2.54).

### [CITATION LIST]

### [PATENT LITERATURE]

[PTL 1] Japanese Unexamined Patent Publication (Kokai) No. 2021-158003

### SUMMARY

### [TECHNICAL PROBLEM]

Although silicon clathrate electrode active materials can suppress expansion during charging as compared to conventional silicon electrode active materials, there is a demand for further suppressing expansion of silicon clathrate electrode active materials during charging.

An object of the present disclosure is to provide a silicon clathrate electrode active material having low expansion during charging and a solid-state lithium-ion battery comprising such a silicon clathrate electrode active material.

### [SOLUTION TO PROBLEM]

The present disclosers have discovered that the above object can be achieved by the following means.

### <Aspect 1>

A silicon clathrate electrode active material, comprising a sodium compound, wherein
a ratio of a mass of the sodium compound relative to a total mass of the silicon clathrate electrode active material and the sodium compound is 0.1% by mass or greater and 5.0% by mass or less.

### <Aspect 2>

The silicon clathrate electrode active material according to Aspect 1, wherein the ratio is 0.5% by mass or greater and 3.0% by mass or less.

### <Aspect 3>

The silicon clathrate electrode active material according to Aspect 1 or 2, wherein the sodium compound is sodium oxide and/or sodium silicate.

### <Aspect 4>

The silicon clathrate electrode active material according to any one of Aspects 1 to 3, at least partially having a clathrate type II structure.

### <Aspect 5>

A negative electrode mixture, comprising the silicon clathrate electrode active material according to any one of Aspects 1 to 4 and a solid electrolyte.

### <Aspect 6>

The negative electrode mixture according to Aspect 5, wherein the solid electrolyte is a sulfide solid electrolyte.

### <Aspect 7>

A negative electrode active material layer, containing the negative electrode mixture according to Aspect 5 or 6.

### <Aspect 8>

A solid-state lithium-ion battery, comprising the negative electrode active material layer according to Aspect 7.

### <Aspect 9>

A method for manufacturing the negative electrode active material layer according to Aspect 7, comprising:
mixing the silicon clathrate electrode active material according to any one of Aspects 1 to 4, a solid electrolyte, and an organic solvent; and
drying a slurry obtained by the mixing.

### [ADVANTAGEOUS EFFECTS OF INVENTION]

According to the present disclosure, a silicon clathrate electrode active material having low expansion during charging and a solid-state lithium-ion battery comprising such a silicon clathrate electrode active material can be provided.

### BRIEF DESCRIPTION OF DRAWINGS

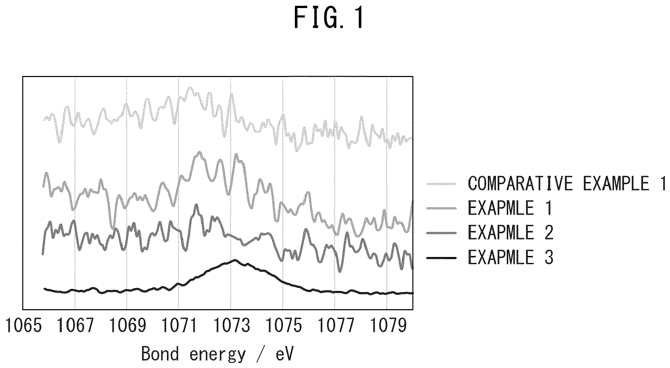

FIG. 1 is a graph showing measurement results of bond energies of Examples 1 to 3 and Comparative Example 1 by X-ray photoelectron spectroscopy (XPS).

### DESCRIPTION OF EMBODIMENTS

Hereinafter, embodiments of the present disclosure will be described in detail. It should be noted that the present disclosure is not limited to the following embodiments, and various modifications can be made thereto within the scope of the disclosure.

### «Silicon clathrate electrode active material»

The silicon clathrate electrode active material of the present disclosure comprises a sodium compound. In the silicon clathrate electrode active material of the present disclosure, a ratio of a mass of the sodium compound relative to a total mass of the silicon clathrate electrode active material and the sodium compound is 0.1% by mass or greater and 5.0% by mass or less.

Silicon clathrate can be obtained by any method. Generally, silicon clathrate can be formed by removing sodium from a sodium-silicon (NaSi) alloy.

For example, in the manufacture of silicon clathrate, silicon is first reacted with sodium hydride to prepare a NaSi alloy. The NaSi alloy prepared in such a manner is then heated to remove sodium from the NaSi alloy for clathratization, whereby silicon clathrate can be prepared. Alternatively, the NaSi alloy prepared in such a manner is reacted with aluminum fluoride as a sodium trapping agent to remove sodium from the NaSi alloy for clathratization, whereby silicon clathrate can be prepared.

At this time, a sodium compound is generated in addition to silicon clathrate. The sodium compound can be removed by a subsequent treatment.

The present disclosers have unexpectedly discovered that a silicon clathrate electrode active material containing low amount of sodium derived from a sodium compound has low expansion during charging.

Without intending to be bound by any theory, the reason therefor is presumed as follows. Specifically, it is considered that the small amount of sodium derived from the sodium compound can suppress oxidation reaction of the silicon clathrate electrode active material and reduction reaction of a solid electrolyte proceeding at an interface of the silicon clathrate electrode active material and the solid electrolyte, and as a result, a decrease in silicon clathrate electrode active material used in charging is suppressed and charging reactions proceed uniformly to suppress expansion during charging.

The "electrode active material" relating to the present disclosure can be used as a "positive electrode active material" or a "negative electrode active material", and is used particularly as a "negative electrode active material".

The silicon clathrate electrode active material of the present disclosure comprises a sodium compound.

In the present disclosure, the ratio of the mass of the sodium compound relative to the total mass of the silicon clathrate electrode active material and the sodium compound is 0.1% by mass or greater and less than 5.0% by mass. It is preferable that the ratio be within the above range in order to sufficiently suppress expansion during charging.

The ratio may be 0.2% by mass or greater, 0.3% by mass or greater, 0.4% by mass or greater, 0.5% by mass or greater, 0.6% by mass or greater, 0.7% by mass or greater, or 0.8% by mass or greater, and may be 4.5% by mass or less, 4.0% by mass or less, 3.5% by mass or less, 3.3% by mass or less, 3.2% by mass or less, 3.1% by mass or less, 3.0% by mass or less, 2.9% by mass or less, or 2.8% by mass or less.

The ratio can be calculated as a ratio of the area in the range of 1072 eV to 1076 eV relative to the area in the range of 1070 eV to 1076 eV from the X-ray photoelectron spectroscopy (XPS) measurement results of the silicon clathrate electrode active material. A VersaProbe II from ULVAC-PHI, Inc. can be used as the apparatus for XPS measurement.

The sodium compound of the present disclosure may be sodium oxide and/or sodium silicate.

The silicon clathrate electrode active material of the present disclosure can at least partially have a clathrate type II structure. In this case, expansion during charging can be further decreased.

In the silicon clathrate electrode active material, a treatment to remove oxide on the surface of the silicon clathrate electrode active material can be carried out in order to adjust the ratio of the mass of the sodium compound relative to the total mass of the silicon clathrate electrode active material and the sodium compound.

In the oxide removal treatment, the silicon clathrate electrode active material is immersed in a solution capable of dissolving and removing silicon oxide, for example, a hydrogen fluoride (HF) aqueous solution, and silicon oxide is dissolved and removed, whereby the sodium compound present on the surface of the silicon clathrate electrode active material can also be removed. When the silicon clathrate electrode active material has sodium silicate (Na₂SiO₃) as the sodium compound, it is possible to convert sodium silicate to soluble silicic acid (H₂SiO₃) using a hydrogen chloride aqueous solution (hydrochloric acid) and remove silicic acid to decrease sodium atoms in the silicon clathrate electrode active material (Na₂SiO₃ + 2 HCl → 2 NaCl (dissolved) + H₂SiO₃ (dissolved)).

By preliminarily carrying out an oxidation treatment before the above oxide removal treatment, the oxide removal treatment can be accelerated. As a specific oxidation treatment, the silicon clathrate electrode active material can be placed in an oxidizing atmosphere and optionally heated. As a method of placing in an oxidizing atmosphere, a method of placing in an apparatus capable of depressurization and gas replacement, depressurizing the inside of the apparatus at room temperature, and then introducing atmospheric air is exemplified.

During the oxidation treatment, an oxide film of silicon oxide (SiO₂) is formed on the surface of the silicon clathrate electrode active material, and when washed with HF, the sodium compound is washed away therewith. When the degree of oxidation in the oxidation treatment is small, the generated amount of SiO₂ is small, and thus a decrease in the sodium compound is suppressed. When the oxidation treatment is not carried out, there is little sodium compound generated, and thus the ratio of the mass of the sodium compound relative to the total mass of the silicon clathrate electrode active material and the sodium compound is decreased.

In the present disclosure, it is preferable that an oxidation treatment be not carried out, or when an oxidation treatment is carried out, the amount of atmospheric air introduced be appropriately adjusted.

### <<Negative electrode mixture>>

The negative electrode mixture of the present disclosure comprises a silicon clathrate electrode active material as a negative electrode active material and a solid electrolyte. In addition, the negative electrode mixture of the present disclosure optionally comprises a conductive aid and a binder.

The "negative electrode mixture" relating to the present disclosure means a composition that can constitute a negative active material layer as-is or by further containing additional components. Further, the "negative electrode mixture slurry" relating to the present disclosure means a slurry that comprises a dispersion medium in addition to the "negative electrode mixture" and can thereby be applied and dried to form a negative electrode active material layer.

### <Silicon clathrate electrode active material>

The above descriptions relating to the silicon clathrate electrode active material of the present disclosure can be referenced regarding the silicon clathrate electrode active material.

### <Solid electrolyte>

The material of the solid electrolyte is not particularly limited, and any material usable as a solid electrolyte used in lithium-ion batteries can be used. For example, the solid electrolyte may be a sulfide solid electrolyte, an oxide solid electrolyte, or a polymer electrolyte, and is preferably a sulfide solid electrolyte.

Examples of the sulfide solid electrolyte include, but are not limited to, sulfide amorphous solid electrolytes, sulfide crystalline solid electrolytes, and argyrodite-type solid electrolytes. Specific examples of the sulfide solid electrolyte can include, but are not limited to, Li₂S-P₂S₅-based (such as Li₇P₃S₁₁, Li₃PS₄, and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅, and Li₇₋ₓPS₆₋ₓClₓ; and combinations thereof.

Examples of the oxide solid electrolyte include, but are not limited to, Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, and Li₃₊ₓPO₄₋ₓNₓ(LiPON).

The sulfide solid electrolyte and the oxide solid electrolyte may be glass or crystallized glass (glass ceramics).

Examples of the polymer electrolyte include, but are not limited to, polyethylene oxide (PEO), polypropylene oxide (PPO), and copolymers thereof.

The mass ratio (mass of silicon clathrate electrode active material : mass of solid electrolyte) of the silicon clathrate electrode active material to the solid electrolyte in the negative electrode mixture is preferably 85:15 to 30:70, and more preferably 80:20 to 40:60.

### <Conductive aid>

The conductive aid is not particularly limited. For example, the conductive aid may be, but is not limited to, a carbon material such as VGCF (vapor-grown carbon fiber), acetylene black (AB), ketjen black (KB), carbon nanotube (CNT), or carbon nanofiber (CNF); or a metal material.

### <Binder>

The binder is not particularly limited. For example, the binder may be of, but is not limited to, a material such as polyvinylidene fluoride (PVdF), butadiene rubber (BR), polytetrafluoroethylene (PTFE), or styrene-butadiene rubber (SBR), or a combination thereof.

### <<Negative electrode active material layer>>

The negative electrode active material layer of the present disclosure contains the negative electrode mixture of the present disclosure. The above descriptions relating to the negative electrode mixture of the present disclosure can be referenced regarding the negative electrode mixture.

The thickness of the negative electrode active material layer may be, for example, 0.1 to 1000 µm.

### <<Method for manufacturing negative electrode active material layer>>

The method of the present disclosure for manufacturing a negative electrode active material layer comprises mixing the silicon clathrate electrode active material of the present disclosure, a solid electrolyte, and an organic solvent; and drying a slurry obtained by the mixing.

The above descriptions relating to the negative electrode mixture of the present disclosure can be referenced regarding the solid electrolyte.

Examples of the organic solvent can include non-polar solvents such as heptane, xylene, and toluene; and polar solvents such as ester-based solvents, tertiary amine-based solvents, ether-based solvents, thiol-based solvents, and ketone-based solvents. The organic solvent is preferably a polar solvent, and more preferably a ketone-based solvent.

### «Solid-state lithium-ion battery»

The solid-state lithium-ion battery of the present disclosure comprises the negative electrode active material layer of the present disclosure. In addition, the solid-state lithium-ion battery of the present disclosure may comprise a negative electrode current collector layer, the negative electrode active material layer of the present disclosure, a solid electrolyte layer, a positive electrode active material layer, and a positive electrode current collector layer in this order. Further, the lithium-ion battery of the present disclosure can be restrained by restraining members such as endplates from both sides in the laminating direction of the above layers.

The "solid-state battery" relating to the present disclosure means a battery using at least a solid electrolyte as the electrolyte, and therefore the solid-state battery may use a combination of a solid electrolyte and a liquid electrolyte as the electrolyte. In addition, the solid-state battery of the present disclosure may be an all-solid-state battery, i.e., a battery using only a solid electrolyte as the electrolyte.

In the lithium-ion battery of the present disclosure, since the negative electrode active material layer contains the silicon clathrate electrode active material of the present disclosure, expansion associated with charging is decreased, thereby suppressing an increase in restraining pressure associated with charging.

<Negative electrode current collector layer>

The material used in the negative electrode current collector layer is not particularly limited. Any material that can be used as a negative electrode current collector for batteries can be appropriately adopted. For example, the material may be, but is not limited to, a stainless steel (SUS), aluminum, copper, nickel, iron, titanium, carbon, or resin current collector.

The shape of the negative electrode current collector layer is not particularly limited. Examples thereof can include foil-like, plate-like, and mesh-like. Among these, a foil-like is preferable.

### <Negative electrode active material layer>

The above descriptions relating to the negative electrode active material layer of the present disclosure can be referenced regarding the negative electrode active material layer.

### <Solid electrolyte layer>

The solid electrolyte layer comprises at least a solid electrolyte. In addition, the solid electrolyte layer may comprise a binder in addition to the solid electrolyte, as needed. The above descriptions relating to the negative electrode mixture of the present disclosure can be referenced regarding the solid electrolyte and the binder.

The solid electrolyte layer may be impregnated with an electrolytic solution having lithium-ion conducting properties.

The electrolytic solution preferably contains supporting salt of the electrolytic solution and a solvent. Examples of the supporting salt (lithium salt) of the electrolytic solution having lithium-ion conducting properties include inorganic lithium salts such as LiPF₆, LiBF₄, LiClO₄, and LiAsF₆; and organic lithium salts such as LiCF₃SO₃, LiN(CF₃SO₂)₂, LiN(C₂F₅SO₂)₂, LiN(FSO₂)₂, and LiC(CF₃SO₂)₃ Examples of the solvent used in the electrolytic solution include cyclic esters (cyclic carbonates) such as ethylene carbonate (EC), propylene carbonate (PC), and butylene carbonate (BC); and chain esters (chain carbonates) such as dimethyl carbonate (DMC), diethyl carbonate (DEC), and ethyl methyl carbonate (EMC). The electrolytic solution preferably contains two or more solvents.

The thickness of the solid electrolyte layer is, for example, 0.1 to 1000 µm. The thickness of the solid electrolyte layer is preferably 0.1 to 300 µm, and is further particularly preferably 0.1 to 100 µm.

### <Positive electrode active material layer>

The positive electrode active material layer is a layer containing a positive electrode active material and optionally a solid electrolyte, a conductive aid, and a binder.

The material of the positive electrode active material is not particularly limited. For example, the positive electrode active material may be, but is not limited to, lithium cobaltate (LiCoO₂), lithium nickelate (LiNiO₂), lithium manganate (LiMn₂O₄), LiCo_{1/3}Ni_{1/3}Mn_{1/3}O₂, or a heteroelement-substituted Li-Mn spinel having a composition represented by Li₁₊ₓMn_{2-x-y}M_{y}O₄ (M is one or more metallic elements selected from Al, Mg, Co, Fe, Ni, and Zn).

The positive electrode active material can comprise a covering layer. The covering layer is a layer containing a material that has lithium-ion conducting performance, has low reactivity with the positive electrode active material and the solid electrolyte, and can maintain the form of a covering layer that does not flow even when brought into contact with the active material or the solid electrolyte. Specific examples of the material constituting the covering layer can include, but are not limited to, Li₄Ti₅O₁₂ and Li₃PO₄, in addition to LiNbO₃.

Examples of the shape of the positive electrode active material include particulate. The average particle size (D50) of the positive electrode active material is not particularly limited, and is, for example, 10 nm or more, and may be 100 nm or more. The average particle size (D50) of the positive electrode active material is, for example, 50 µm or less, and may be 20 µm or less. The average particle size (D50) can be calculated from measurements with, for example, a laser diffraction particle size distribution analyzer or a scanning electron microscope (SEM).

The above descriptions relating to the negative electrode mixture of the present disclosure can be referenced regarding the solid electrolyte, the conductive aid, and the binder.

When the positive electrode active material layer contains a solid electrolyte, the mass ratio (mass of positive electrode active material : mass of solid electrolyte) of the positive electrode active material to the solid electrolyte in the positive electrode active material layer is preferably 85:15 to 30:70, and more preferably 80:20 to 40:60.

The thickness of the positive electrode active material layer is, for example, 0.1 µm or more and 1000 µm or less.

<Positive electrode current collector layer>

The material and shape used for the positive electrode current collector layer are not particularly limited, and the above descriptions relating to the negative electrode current collector layer of the present disclosure can be referenced therefor. The material of the positive electrode current collector layer is preferably aluminum, and the shape thereof is preferably foil-like.

### EXAMPLES

### <<Synthesis of silicon clathrate electrode active material>>

### <Alloying>

### (Comparative Example 1)

As a silicon (Si) source, Si powder (Japan Pure Chemical Co., Ltd., SIEPB32) was prepared. The Si powder and metallic lithium (Li) were weighed at a molar ratio of Li/Si = 4.0, the weighed Si powder and Li were mixed in a mortar in an argon atmosphere to obtain a lithium-silicon alloy. The obtained lithium-silicon alloy was reacted with ethanol in an argon atmosphere and further treated with hydrogen fluoride (HF) to obtain Si powder having voids inside the primary particles, i.e., Si powder having a porous structure.

The Si powder having a porous structure and sodium hydride (NaH) as a sodium (Na) source were used to manufacture a sodium-silicon (NaSi) alloy. It should be noted that the NaH used was preliminarily washed with hexane. The NaH and the Si powder having a porous structure were weighed at a molar ratio of 1.05: 1, and the weighed NaH and Si powder having a porous structure were mixed with a cutter mill. The obtained mixture was heated under the conditions of 500°C and 40 h in an argon atmosphere with a heating furnace to obtain a powdery NaSi alloy.

### <Clathratization>

The obtained NaSi alloy and aluminum fluoride (AlF₃) were weighed at a molar ratio of 1:0.35, and the weighed NaSi alloy and the AlF₃ were mixed with a cutter mill to obtain a reaction starting material. The obtained powdery reaction starting material was placed in a reaction vessel made of stainless steel and heated under the conditions of 310°C and 60 h in an argon atmosphere with a heating furnace to obtain a reaction product comprising silicon clathrate. The obtained reaction product was placed in an apparatus capable of depressurization and gas replacement, the inside of the apparatus was depressurized at room temperature, and atmospheric air was then introduced for oxidation. The oxidized reaction product was acid-washed using a mixed solvent of HNO₃ and H₂O mixed at a volume ratio of 10:90 to remove by-products in the reaction product. After washing, the reaction product was filtered, and the filtered solid content was dried at 120°C for 3 h or more to obtain powdery silicon clathrate electrode active material. The obtained material was further washed with a 3-wt% HF solution, filtered, and then dried at 120°C for 3 h or more to obtain the silicon clathrate electrode active material of Comparative Example 1.

### (Example 1)

Except that the heating time for clathratization was set to 20 h and oxidation was not carried out, the silicon clathrate electrode active material of Example 1 was obtained in the same manner as in Comparative Example 1.

### (Example 2)

Except that oxidation for clathratization was not carried out, the silicon clathrate electrode active material of Example 2 was obtained in the same manner as in Comparative Example 1.

### (Example 3)

Except that in clathratization, atmospheric air was introduced for oxidation such that the amount of atmospheric air introduced was 1/100 of that in Comparative Example 1, the silicon clathrate electrode active material of Example 3 was obtained in the same manner as in Comparative Example 1.

The silicon clathrate electrode active material of each example comprised a clathrate type II crystal phase.

### <<Production of lithium-ion battery>>

Using the silicon clathrate electrode active material of each example, a lithium-ion battery of each example was produced as follows.

### <Preparation of negative electrode mixture>

Ketone-based solvent, a 5-wt% ketone-based solution of a polyvinylidene fluoride (PVDF)-based binder, vapor-grown carbon fiber (VGCF) as the conductive aid, the synthesized silicon clathrate electrode active material, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a slurry-like negative electrode mixture (negative electrode mixture slurry).

### <Formation of negative electrode active material layer>

The obtained negative electrode mixture slurry was applied onto a copper (Cu) foil as a negative electrode current collector layer by a blade method using an applicator and dried for 30 min on a hot plate heated to 100°C to form a negative electrode active material layer on the negative electrode current collector layer.

### <Formation of solid electrolyte layer>

Heptane, a 5-wt% heptane solution of a butadiene rubber (BR)-based binder and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a solid electrolyte slurry.

The obtained solid electrolyte slurry was applied onto an aluminum (Al) foil as a release sheet by a blade method using an applicator and dried for 30 min on a hot plate heated to 100°C, whereby a solid electrolyte layer was formed. Three solid electrolyte layers were produced.

### <Preparation of positive electrode mixture>

ketone-based solvent, a 5-wt% ketone-based solution of a PVDF-based binder, LiNi_{1/3}Co_{1/3}Mn_{1/3}O₂ having an average particle size of 6 µm as the positive electrode active material, a Li₂S-P₂S₅-based glass ceramic as the sulfide solid electrolyte, and VGCF as the conductive aid were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 3 min, further stirring was carried out with the ultrasonic dispersion apparatus for 30 s, and the container was shaken with the shaker for 3 min to obtain a positive electrode mixture slurry.

### <Formation of positive electrode active material layer>

The obtained positive electrode mixture slurry was applied onto an Al foil as a positive electrode current collector layer by a blade method using an applicator and dried for 30 min on a hot plate heated to 100°C, whereby a positive electrode active material layer was formed on the positive electrode current collector layer.

### <Assembly of battery>

The positive electrode current collector layer, the positive electrode active material layer, and a first solid electrolyte layer were laminated in this order. The laminated product was set in a roll press machine and pressed at a pressing pressure of 100 kN/cm and a pressing temperature of 165 °C, whereby a positive electrode laminated body was obtained.

The negative electrode current collector layer, the negative electrode active material layer, and a second solid electrolyte layer were laminated in this order. The laminated product was set in a roll press machine and pressed at a pressing pressure of 60 kN/cm and a pressing temperature of 25°C, whereby a negative electrode laminated body was obtained.

The Al foil as a release sheet was peeled off from the solid electrolyte layer surface of each of the positive electrode laminated body and the negative electrode laminated body. The Al foil as a release sheet was then peeled off from a third solid electrolyte layer.

The positive electrode laminated body and the negative electrode laminated body were set so that the solid electrolyte layer side of each thereof faces the third solid electrolyte layer and laminated to each other. The laminated body was set in a flat uniaxial press machine and temporarily pressed at 100 MPa and 25°C for 10 s. The laminated body was finally set in the flat uniaxial press machine and pressed at a pressing pressure of 200 MPa and a pressing temperature of 120°C for 1 min. As a result, an all-solid-state battery was obtained.

### «Evaluation»

### <Ratio of mass of sodium compound relative to total mass of silicon clathrate electrode active material and sodium compound>

XPS measurement was carried out on each of the silicon clathrate electrode active materials obtained in Comparative Example 1 and Examples 1 to 3 using an X-ray photoelectron spectrometer (ULVAC-PHI, Inc., VersaProbe II). The ratio of the mass of the sodium compound relative to the total mass of the silicon clathrate electrode active material and the sodium compound was calculated as a ratio of the area in the range of 1072 eV to 1076 eV relative to the area in the range of 1070 eV to 1076 eV from the XPS measurement results. From the obtained peaks, it was presumed that the sodium compound was at least one of sodium oxide and sodium silicate.

### <Expansion amount>

The restraining pressure fluctuation of the all-solid-state battery of each example when restrained at a predetermined restraining pressure using a restraining jig and charged by constant current-constant voltage to 4.55 V at a 10-h rate (1/10 C) was measured. This restraining pressure fluctuation was defined as the expansion amount in the present disclosure. It should be noted that the restraining pressure fluctuation is the difference between the highest value and the lowest value in restraining pressure. The values of the Examples are shown as relative values when the value of Comparative Example 1 was set to 100.

### «Results»

The ratio (mass fraction of sodium compound) of the mass of the sodium compound relative to the total mass of the silicon clathrate electrode active material and the sodium compound and the expansion amount of silicon clathrate electrode active material for each example are shown in Table 1.

**Table 1**

| | Manufacturing conditions | | Results | |
|---|---|---|---|---|
| | Firing time [h] | Oxidation (relative value of amount of atmospheric air introduced) | Mass fraction of Na compound [% by mass] | Expansion amount (relative value) |
| Comparative Example 1 | 60 | 100 | 0.01 | 100 |
| Example 1 | 20 | - | 0.89 | 36.7 |
| Example 2 | 60 | - | 1.05 | 16.7 |
| Example 3 | 60 | 1 | 2.80 | 43.3 |

As shown in Table 1, the batteries of Examples 1 to 3, in which the ratio of the mass of the sodium compound relative to the total mass of the silicon clathrate electrode active material and the sodium compound was within the range of the present disclosure, had smaller expansion amounts than the battery of Comparative Example 1.

## Claims

1. A silicon clathrate electrode active material, comprising a sodium compound, wherein
a ratio of a mass of the sodium compound relative to a total mass of the silicon clathrate electrode active material and the sodium compound is 0.1% by mass or greater and 5.0% by mass or less.

2. The silicon clathrate electrode active material according to claim 1, wherein the ratio is 0.5% by mass or greater and 3.0% by mass or less.

3. The silicon clathrate electrode active material according to claim 1, wherein the sodium compound is sodium oxide and/or sodium silicate.

4. The silicon clathrate electrode active material according to claim 1, at least partially having a clathrate type II structure.

5. A negative electrode mixture, comprising the silicon clathrate electrode active material according to claim 1 and a solid electrolyte.

6. The negative electrode mixture according to claim 5, wherein the solid electrolyte is a sulfide solid electrolyte.

7. A negative electrode active material layer, containing the negative electrode mixture according to claim 5.

8. A solid-state lithium-ion battery, comprising the negative electrode active material layer according to claim 7.

9. A method for manufacturing the negative electrode active material layer according to claim 7, comprising:
mixing the silicon clathrate electrode active material according to claim 1, a solid electrolyte, and an organic solvent; and
drying a slurry obtained by the mixing.
